(19) Europäisches Patentamt
European Patent Office
Office européen des brevets

(11) EP 2 370 487 B1

(12) **EUROPEAN PATENT SPECIFICATION**

(45) Date of publication and mention of the grant of the patent:
**06.03.2013 Bulletin 2013/10**

(21) Application number: **09805899.3**

(22) Date of filing: **11.12.2009**

(51) Int Cl.:
***C08G 18/10*** *(2006.01)* ***C08G 18/38*** *(2006.01)*
***C08G 18/78*** *(2006.01)* ***C08J 11/12*** *(2006.01)*

(86) International application number:
**PCT/CZ2009/000153**

(87) International publication number:
**WO 2010/066211 (17.06.2010 Gazette 2010/24)**

(54) **METHOD OF PREPARATION OF THERMODEGRADABLE POLYURETHANE FOAMS**

VERFAHREN ZUR HERSTELLUNG VON THERMISCH ABBAUBAREN POLYURETHANSCHÄUMEN

PROCÉDÉ DE PRÉPARATION DE MOUSSES POLYURÉTHANE THERMODÉGRADABLES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **11.12.2008 CZ 20080800**

(43) Date of publication of application:
**05.10.2011 Bulletin 2011/40**

(73) Proprietor: **Vysoké Ucení Technické V Brne**
**601 90 Brno (CZ)**

(72) Inventors:
- **VOJTOVA, Lucy**
  **664 57 Menin (CZ)**
- **JANCAR, Josef**
  **623 00 Brno (CZ)**

(74) Representative: **Gabrielova, Marta et al**
**Inventia s.r.o.**
**Na Belidle 3**
**150 00 Praha 5 (CZ)**

(56) References cited:
**GB-A- 886 967** **GB-A- 1 551 274**
**US-A- 3 909 497** **US-A- 3 994 835**
**US-A- 4 284 729**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 370 487 B1

## Description

### Field of the Invention

The invention relates to a method of preparation of thermodegradable polyurethane foams, containing an incorporated thermolabile azo-compound, allowing for the thermal degradation of the polymer into components that can be optionally re-used.

### Background Art

Polyurethane (PUR) foams are widely used in many fields as structural, insulating, electroinsulating, flotation, cushion and packing material. Flexible PUR foams are usually prepared by the reaction of a polyfunctional alcohol (so-called polyol), polyisocyanate and a blowing agent. The most commonly used is the "one-shot" preparation process, wherein the reactants are mixed directly in the reactor under simultaneous addition of water as the blowing agent, catalyst and other additives. The foam properties are mostly affected by the initial material properties, but they can be modified by a broad range of additives, i.e. fillers, stabilizers, cross-linking agents or chain extenders (G. Oertel: Polyurethane handbook, 2nd ed., Hanser Publisher (1993)).

Since polyurethane foams belong to thermosets (they cannot be melted and mostly not even dissolved), it is difficult to recycle or degrade these materials and therefore they are often disposed of at dumping places after their life time expiration. Thereby, they pollute the environment by sparingly decomposable materials. A possible solution of this problem could be the preparation of thermodegradable polyurethane foams, degradable at a predefined temperature to low-molecular soluble substances that can be re-used. However, the resulting thermodegradable polyurethane foams must retain the structural properties at both foam preparation temperatures and at maximum foam applicability temperatures (up to 160 °C) and, on the contrary, they should allow a controlled decomposition at a temperature much lower than 240 °C, which is the initial decomposition temperature of urethane bonds in polyurethane foams. A modification of the polymer network by a thermosensitive prodegradant with the maximum rate of chemical bond decomposition in the range of from 160 °C to 200 °C, preferably at about 180 °C, is necessary to achieve such thermodegradable polyurethane foam.

The thermoprodegradant is a substance containing a thermolabile chemical bond that decomposes by heating above the required temperature and releases free radicals capable of initiating the thermal decomposition of said polymer network (Hendry et al.: US 3,909,497 (1975)). The thermodegradable prodegradant, which initiates the thermal degradation of the polymer, can be admixed into PUR foam either as an additive without chemical binding, then the degradation proceeds slowly, or in can be bound by a covalent bond to an initial substance before the preparation of PUR, and then the degradation proceeds more quickly. The advantage of the covalently bound thermoprodegradant is that the initiation and the degradation, e.g., of thermodegradable PUR foams, proceeds in the entire polymer volume by thermolabile groups decomposition in the polymer. A substantial advantage is also the possibility to choose the degradation temperature which allows to control the thermodegradable PUR foam decomposition rate.

The synthesis of thermodegradable polymers with controllable thermodegradability characteristics is possible mostly because of a large number of symmetric, bifunctional azo-compounds (XRN=NRX, wherein X is OH, COOH or COOMe groups), which are well known as sources of tertiary alkyl or aryl radicals in thermally, photochemically or electrochemically initiated degradations.

Some polymers containing azo-compounds acting as macro initiators of the radical polymerization have been already studied. The most commonly used thermal initiator for radical polymerization is azobisisobutyronitrile (AIBN), because its decomposition rate is not dependent on the medium and therefore it is exactly known. Moreover, the radicals formed by nitrogen elimination do not undergo any further fragmentation. For example, AIBN has been used for polybutene-1 chain cleavage in an organic solvent (A. Frese: DE 1299880 (1969)). Unfortunately, the AIBN decompositon rate at the temperatures above 80 °C is too fast for decomposition kinetic experiments. Moreover, some polymers have to be thermally stable up to 160 °C (including also polyurethanes), that is why already in 1967 Mortimer (US 3,306,888 (1967)) synthesized azobisisobutanol (ABIB) as a new compound providing free radicals applicable for kinetic studies at the temperatures in the range of 150 to 200 °C. At these temperatures, ABIB undergoes a homolytic bond cleavage by disproportionation to free tertiary radicals, which do not recombine, and its decomposition rate follows first-order kinetics (G. A. Mortimer: US 3306888 (1967)). Azobisisobutanol (ABIB) shown in Fig.1, can be prepared by the synthesis from azobisisobutyronitrile according to Mortimer.

In 1975, ABIB was incorporated into linear polyurethane polymer chain, the thermostability of which was studied (Hendry et al.: US 3,909,497 (1975)). The reaction proceeded in three steps in dimethylsulfoxide at 100 °C for 6 hours. It has been found that the linear PUR thermoplast modified in this way decomposed in 2 hours at 185 °C to soluble degradation products.

According to our knowledge, no solution of the problem of degradation of PUR foams including incorporation

of a thermolabile bi-functional azo-compound into the polymer network with the aim to form thermodegradable polyurethane foams is at present known.

Disclosure of the Invention

The object of the present invention is a method of preparation of thermodegradable polyurethane foams, characterized in that at least one bifunctional azo-compound having the general formula

$X\text{-}CH_2\text{-}C(R_1R_2)\text{-}N{=}N\text{-}C(R_1R_2)\text{-}CH_2\text{-}X$,

wherein X is -OH, -COOH or -COOMe and $R_1$ and $R_2$ are $C_1$-$C_{20}$ alkyl or $C_5$-$C_{20}$ cycloalkyl,
is mixed with at least one polyisocyanate compound having the general formula

$R(NCO)_n$,

wherein n represents an integer from 2 to 5, R is selected from the group comprising an aliphatic hydrocarbon containing 2-18 carbon atoms, cycloaliphatic hydrocarbon having 4-15 carbon atoms, arylalkyl having 8-15 carbon atoms and an aromatic hydrocarbon containing 6-15 carbon atoms,
at the temperature of from 20 °C to 50 °C, thereby forming an azoisocyanate precursor, which is subsequently mixed with at least one polyol, wherein the isocyanate index [NCO]/[OH] x 100 is in the range of from 70 to 120, and with at least one blowing agent in the presence of at least one catalyst.

The mixture is after mixing poured into a mould and reacts afterwards in open air approximately for 48 hours.

The present invention is based on the modification of the PUR foam properties by the incorporation of the thermoprodegradant based on bifunctional azo-compound into the polymer network aiming to get controllably thermodegradable polyurethane foams (TD-PUR), degradable at a predefined temperature of about 180 °C.

In accordance with this invention, the TD-PUR foam is formed by the reaction of the bifunctional azo-compound with the polyisocyanate and subsequently with the polyol, with at least one type of catalyst, blowing agent and optionally a surfactant. The mixture can be supplemented by further additives such as pigments, fire retardants, fillers etc.

A suitable bifunctional azo-compound, having the general formula $X\text{-}CH_2\text{-}C(R_1R_2)\text{-}N{=}N\text{-}C(R_1R_2)\text{-}CH_2\text{-}X$, wherein X is -OH, -COOH or -COOMe group and $R_1$ and $R_2$ are $C_1$-$C_{20}$ alkyl or $C_5$-$C_{20}$ cycloalkyl, posseses active functional groups applicable for reactions with a polyisocyanate or a polymer. Symmetric azo-compounds having two hydroxyl groups, wherein $R_1 = R_2$, such as azobisisobutanol, are preferred.

In the general formula $R(NCO)_n$ of the polyisocyanate n represents an integer from 2 to 5, preferably 2, and R is selected from the group comprising aliphatic hydrocarbon containing 2-18 (preferably 6-10) carbon atoms, cycloaliphatic hydrocarbon having 4-15, preferably with 5-10 carbon atoms, araliphatic hydrocarbon having 8-15 (preferably 8-13) carbon atoms or aromatic hydrocarbon containing 6-15 (preferably 6-13) carbon atoms. Generally, commonly available polyisocyanates, such as 2,4- and 2,6-toluenediisocyanates and their isomers mixtures (TDI) are preferred.

Polyols obtained both from petrochemical and natural renewable sources can be used in the reaction mixture. Polyols obtained from crude oil can be based on polyethers, polyesters, polyacetals, polycarbonates, polyesterethers, polyestercarbonates, polythioethers, polyamides, polyesteramides, polysiloxanes, polybutadiens and polyacetones. In the present invention, the polyetherpolyol of the petrochemical origin having hydroxyl number in the range of 40 - 600 mg KOH/g is preferred for polyurethane foams, more preferred are polyols having relatively low hydroxyl number in the range of 40 - 160 mg KOH/g (even more preferably 40 - 60 mg KOH/g) and the molecular weight in the range of 2000 - 6000 $g.mol^{-1}$ (preferably 3000 - 4000 $g.mol^{-1}$). Polyols based on natural oils, such as castor, sunflower, palm, corn, peanut, linseed or cottonsead oils can be used as full or partial polyol alternatives of the polyols of the petrochemical origin.

Preferred catalysts for the preparation of flexible TD-PUR according to the invention are known and commonly available chemicals such as tertiary amines (triethylamine, tributylamine, N-methylmorpholine, N-ethylmorpholine, N,N,N',N'-tetramethylethylenediamine, pentamethyl-diethylenetriamine, 1,4-diazabicyclo(2,2,2)octane, N-methyl-N'-dimethylaminoethylpiperazine, bis-(dimethylaminoalkyl)piperazine, N,N-dimethylbenzylamine, N,N-dimethylcyclohexylamine, N,N-diethylbenzylamine, bis-(N,N-diethylaminoethyl)adipate, N,N,N',N'-tetramethyl-1,3-butanediamine, N,N-dimethylphenylethylamine, 1,2-dimethylimidazole, 2-methylimidazole), monocyclic and bicyclic amines together with bis-(dialkylamino)alkylethers such as 2,2-(bis-(dimethylamino)ethyl)ether. Further suitable catalysts are for instance inorganic compounds, especially those based on tin compounds, preferably tin salts of carboxylic acids such as tin acetate, tin octoate, tin laurate, tin ethylhexanoate and tin(IV) compounds, such as dibutyltin(IV) oxide, dibutyltin(IV) dichloride, dibutyltin(IV) diacetate, dibutyltin(IV) laurate, dibutyltin(IV) maleate and dioctotin(IV) diacetate. The catalytic components are mostly used in the form of mixtures thereof in the total amount of 0.01-0.4 % w/w, relative to the total mass of the mixture.

A blowing agent addition is also necessary for the PUR foams manufacture. Chlorofluorinated hydrocarbons, hydrogenated chlorofluorinated hydrocarbons and hydrogenated fluorinated hydrocarbons from the group of physical

foaming agents are used. The chemical blowing agents used are those, which form $CO_2$ due to the reaction with polyisocyanates.

A widely used blowing agent is water. Isocyanate groups reacting with water form $CO_2$ that froths the reaction mixture up even before the subsequent stiffening. However, an excessive amount of water causes foam cracking and collapsing. Water can be added also in the form of steam or salt hydrates. However, water is preferably added in the liquid form. The amount of water added is in the range of 2 - 20 % w/w relative to isocyanate, preferably in the range of 2 - 5 % w/w.

Surfactants, stabilizers, fire retardants, fillers and antioxidants can be used in the mixtures for PUR foams. They are usually mixed with the initial polyol component before its reaction with the polyisocyanate. Sulfonated castor oil, silicone oil (e.g., polydimethyl siloxane, polyoxyalkylenether-polydimethyl siloxane block copolymer), triethylamine oleate, dimethylamine ricinoleate, or diethylamine or triethylamine mixtures with a suitable fatty acid, e.g., oleic, ricin acids etc., can be used as the surfactant providing for the complete homogenization of reaction components and assuring the foam stability and strength. Addition of powdered or fibrous inorganic fillers increases the volume mass. Powdered fillers support also the regular cell structure formation. Organic fillers such as starch, wood flour etc., contain hydroxyl groups, which can react with isocyanate groups, however, since these fillers are solid substances, the reaction rate in the heterogeneous phase is slow and these fillers act as inert materials. Foams containing these fillers show a lower resistance against humidity. Particles of phenolic resins and polystyrene can be also used as fillers. Further inorganic fillers such as clays and talc are used. They act similarly as the synthetic fillers, but do not affect the foam hygroscopic properties. PUR foams can also be coloured to any colour by suitable pigments before blowing. Pigments have to be resistant against an elevated temperature, considering the exothermic character of the reaction of polyisocyanate with polyol. Since PUR are very often required to be inflammable, fire retardants such as trichloroetylphosphate, antimony (III)oxide, chlorinated paraffins with antimony(III)oxide etc., can be added. The preparation according to the invention of the TD-PUR foams with incorporated bifunctional azo-compounds includes two steps:

In the first step, the azo-compound reacts with polyisocyanate forming the azoisocyanate precursor. If diisocyanate is used, the molar ratio of azo-compund to diisocyanate is preferably in the range of 1 : 2.0 - 1 : 2.5. If another polyisocyanate is used, the molar ratio to azo-compound has to be modified adequately. Precursor formation can be preferably verified by FT-IR spectroscopy.

In the second step, the prepared azoisocyanate precursor is added to the polyol mixed with other components of the system (catalyst, blowing agent and optionally other additives) in a manner that maintains the optimum isocyanate index ([NCO]/[OH] x 100). The foam containing the polyisocyanate in a stoichiometric ratio relative to other components has the isocyanate index equal to 100. It has been shown that foams with the content of isocyanate lower than the stoichiometric ratio, e.g. having the isocyanate index in the range of 85 - 90, have a reduced covalent cross-link content in the system, resulting in a more elastic foam. The foams containing excess of isocyanate relative to polyol, e.g., having the isocyanate index of 105 - 110, are typically harder than those having the isocyanate index of 100. The isocyanate index in the range of 70 - 120 is preferred for TD-PUR foams of the invention, more preferably in the range of 100 - 110. The amount of the azoisocyanate precursor added to the polymer mixture will affect the thermal degradation process (initiation, rate, intensity etc.) of the resulting TD-PUR foam, that is mostly based on the degradation of -N=N- groups in the polymer network according to this invention (Equation 1).

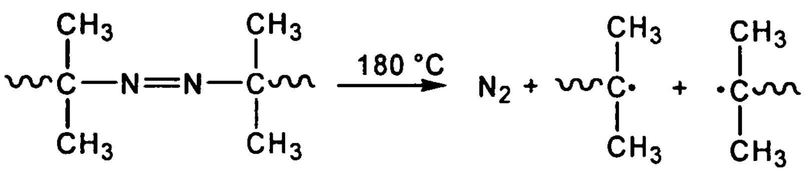


Equation 1. Thermal degradation of azo-bonds in the polymer network

The amount of the azoisocyanate precursor added to the polymerization mixture can be reduced depending on the desired conditions of the thermal degradation, however this decreases also the isocyanate index value. In order to modify the isocyanate index to the required value, unmodified polyisocyanate (eventually diisocyanate) that does not affect the thermal degradation process significantly can be added to the system.

In the third step, the preparation of the TD-PUR foam proceeds according to a standard industrial method for the preparation of flexible PUR foams, wherein the reaction mixture is homogenized by mixing until a cream consistency is acquired and then the reaction mixture is poured into a mould. The new thermodegradable PUR foam is let to cure for 48 hours in the open air.

The invention is further illustrated by way of example, which should not be construed as further limiting.

Tables and Figures

Table 1 shows the composition of the reaction mixtures of example 1.
Table 2 shows the degradation temperatures of thermodegradable polyurethane foams prepared according to example 1.
Table 3 shows the kinetic data of the degradation of thermodegradable polyurethane foams prepared according to example 1.
Fig. 1 represents the chemical structure of azobisisobutanol.
Fig. 2 represents the weight loss dependence on the temperature of each TD-PUR foam sample according to example 1.
Fig. 3 shows the dependence of the To on the amount of ABIB in TD-PUR.
Fig. 4 shows the degradation curves for various amounts of ABIB in TD-PUR.

Examples

Example 1

Azobisisobutanol (ABIB) was prepared by a modified method according to Mortimer (US 3,306,888 (1967)). The azoisocyanate precursor was prepared by mixing azobisisobutanol with toluenediisocyanate isomers mixture at the molar ratio of 1 : 2.25, i.e., 47.9 g of azobisisobutanol with 107.79 g of toluenediisocyanate isomers mixture (TDI), consisting of 2,4-toluenediisocyanate and 2,6-toluenediisocyanate in molar ratio 80/20 at 40 °C for 5 minutes (see Equation 2). The resulting azoisocyanate precursor was further mixed with 100.0 g of polyetherpolyol (PEP) having the hydroxyl number 48 ± 3 mg KOH/g and the molecular weight of 3500 $g.mol^{-1}$, with water and the catalyst mixture, which is a mixture of 0.03 g of (bis(dimethylamino)ethyl)ether with 0.09 g of triethylenediamine, 0.21 g of tin ethylhexanoate and 1.0 g of polydimethylsiloxane as the surfactant according to Table. 1 in such a way to retain always the same isocyanate index equal to 102. Samples were mixed at 2500 r.p.m. until the cream consistence was acquired and immediately poured into prepared moulds. Samples prepared by this way were kept standing in the open air for 48 hours until the reaction was completed. Apart from the reference sample (REF.PUR) containing no ABIB, four samples of TD-PUR foams containing 1.6; 7.8; 12.6 and 18.3 % w/w of ABIB were prepared. Results are shown in Table 1.

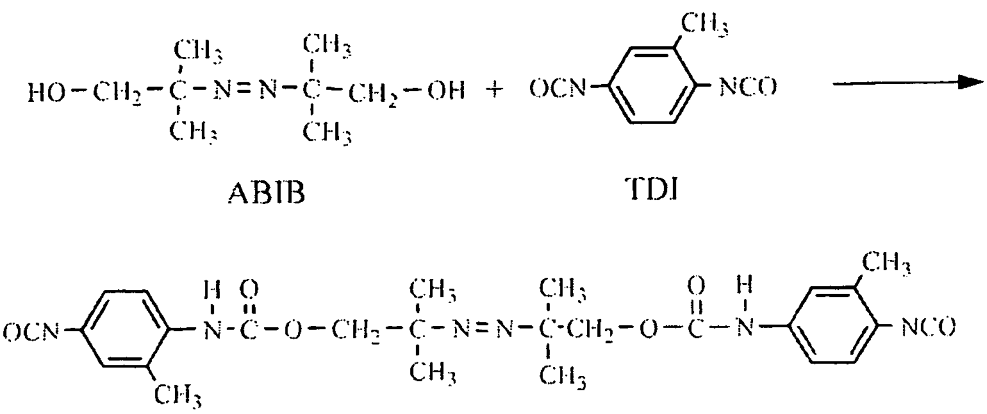
ABIB
TDI

**Equation 2. Azoisocyanate precursor synthesis by reacting of ABIB with TDI.**

In order to retain the same isocyanate ratio in all samples (including the reference foam REF.PUR), the maximum amount of ABIB added to PUR foam is 18.3 % w/w. At this amount all TDI in the reaction mixture will be bound to ABIB. No more ABIB azo-initiator can be introduced into the system. If less than 18.3 % w/w of ABIB is added to the mixture (and thus also smaller amount of TDI bound to ABIB) an unmodified TDI (TDI extra) has to be added to the system for maintaining the isocyanate index (see Table 1).
The thermodegradation of the resulting TD-PUR foams has been studied by the thermogravimetric analysis (TGA) and differential scanning calorimetry (DSC).

Based on these analyses, it was found that the thermodegradable PUR foam containing an incorporated azo-compound according to this invention has the initial degradation temperature by about 62.3 °C lower (177.7 °C) in comparison with the original commercial foam (240.9 °C). The rate of thermodegradation of TD-PUR containing 18.3 % w/w of ABIB was found to be more than 3 times greater after six hours at 200 °C which is in agreement with the increase of the weight loss from 6.8 % to 20.1 % in comparison with the unmodified PUR foam.

TD-PUR foam samples including the sample of the unmodified PUR foam (REF.PUR) and the pure ABIB, were subjected to the thermogravimetric analysis. The weight loss dependence on temperature of each TD-PUR foam sample is illustrated in Fig. 2. Whereas the REF.PUR thermogram shows a two-stage curve corresponding to the urethane and polyether bonds degradation, all other thermograms of TD-PUR foams modified by the ABIB addition show a three-stage degradation change corresponding to the azo-bond decomposition in ABIB followed by the urethane and polyether bonds decomposition.

The thermogravimetric TGA curve for REF.PUR shows that the reference PUR foam starts to degrade at the temperature To = 240.9 °C (initiate degradation temperature measured at the weight loss equal to 1 % w/w) corresponding to the urethane bond degradation ($T_U$), reaching the maximum degradation rate at the temperature $T_U$ = 336.2 °C. After the approximate total mass decrease of 35 % w/w of the REF.PUR foam, the second mass change of the sample occurs, which corresponds to the polyether ($T_E$) bond decomposition at the temperature of about 357 °C. The maximum rate of this degradation process is reached at the temperature $T_E$ = 416.9 °C. The degradation processes of the REF.PUR foam terminate at the temperature of about 450 °C.

The thermogram of the TD-PUR sample with the maximum content 18.3 % w/w of ABIB shows three stage changes of the weight loss. The analysis discloses that the sample degradation (especially the cleavage of azo bonds in ABIB) occurs already at the temperature of about To = 177.7 °C, when the maximum thermodegradation rate of azo-bonds $T_A$ is at 226.5 °C.

By parallel measurement of the sample using DSC analysis it was found that the $T_A$ temperature corresponds to the maximum value of the endothermic peak, i.e., to the temperature, at which the sample absorbed during heating the maximum heat. This finding proves that the azo-bond cleavage is an endothermic reaction that initiates the complete PUR foam decomposition. After ABIB decomposition in the TD-PUR foam with the total weight loss of approximately about 21 % w/w, an exothermic urethane bond break-down at $T_U$ = 314.3 °C and polyether bond decomposition at $T_E$ = 418.7 °C follow.

By comparing the TGA curves of particular TD-PUR foams including REF.PUR (0 weight % of ABIB) and pure ABIB, we can conclude that whereas temperatures of the maximum rates of decomposition of polyether bond ($T_E$) of particular samples do not differ significantly (degradation of a stable bond), the initiate degradation temperature (To) and the temperature of the maximum rates of degradation of azobisisobutanol ($T_A$) and urethane bond ($T_U$) decrease with the increasing content of ABIB in TD-PUR foam. Particular values of degradation temperatures acquired from first derivations of DTG curves of corresponding thermograms are shown in Table 2.

It is interesting that at the temperature $T_A$ of the ABIB alone (177°C), the thermal degradation of TD-PUR with the maximum content of ABIB equal to 18.3 % w/w starts. It is evident that the ABIB binding to TDI results in the shift of initiate degradation temperature to higher $T_0$ in the resulting TD-PUR foam. Fig. 3 shows that the initiate degradation temperature ($T_0$), measured at 1 % w/w of the sample weight loss, is inversely proportional to the ABIB amount in TD-PUR foam. By the addition of 18.3 % w/w ABIB into the chemical mixture for PUR foam preparation, a decrease of $T_0$ by about 62.3 °C from 240.9 % of REF.PUR to 177.7 °C when the decomposition rate of ABIB is maximum. This confirms the assumption, that the addition of the thermolabile ABIB azo-compound to the mixture for PUR foam preparation significantly affects the thermal stability of the TD-PUR by creating particular tertiary radicals attacking urethane bonds in TD-PUR. This causes a faster thermal degradation of the entire TD-PUR foam at lower temperatures compared to the commercial REF.PUR.

The thermo degradation of the polymer 3D-covalent network is known to decrease the molecular weight of particular polymer chains, which affects positively the degradation products solubility useful for recycling.

In order to evaluate the degradation rate after incorporating ABIB to PUR foams, the REF.PUR sample together with TD-PUR foam samples containing from 7.8 to 18.3 % w/w of ABIB was subjected to thermodegradation at 200 °C for the period of 6 hours (isothermal mode). Results of individiual degradation curves in Fig. 4 show the direct dependence between the enhancing degradation rate of TD-PUR and the increasing amount of thermolabile ABIB in TD-PU.

The degradation rate constants (k) of each TD-PUR foam sample in Fig.4 were calculated from $1/t_1$ in accordance with the first order kinetic equation that fits the kinetic data (1):

$$y = A_1.\exp(-kx/t_1) + y_0 \qquad (4)$$

Calculated values are disclosed in Table 3 together with weight losses of particular samples during 6 hours at

200 °C.

Table 3 shows more than 3 fold enhancement of the thermodegradation rate (from 0.003 to 0.01 $s^{-1}$) by adding 18.3 w% of ABIB into TD-PU foam. In this case, the weight loss after 6 hours at 200 °C increased almost three times from 6.8 % to 20.1%.

All percentages shown in this document are weight % if not stated otherwise.

## Claims

1. A method of preparation of thermodegradable polyurethane foams, **characterized in that** at least one bifunctional azo-compound having the general formula

   $X-CH_2-C(R_1R_2)-N=N-C(R_1R_2)-CH_2-X$,

   wherein X is -OH, -COOH or -COOMe and $R_1$ and $R_2$ are $C_1$-$C_{20}$ alkyl or $C_5$-$C_{20}$ cycloalkyl, is mixed with at least one polyisocyanate compound having the general formula

   $R(NCO)_n$,

   wherein n represents an integer from 2 to 5, R is selected from the group comprising an aliphatic hydrocarbon containing 2-18 carbon atoms, cycloaliphatic hydrocarbon having 4-15 carbon atoms, arylalkyl having 8-15 carbon atoms and an aromatic hydrocarbon containing 6-15 carbon atoms, at the temperature of from 20 °C to 50 °C, thereby forming an azoisocyanate precursor, which is subsequently mixed with at least one polyol, wherein the isocyanate index [NCO]/[OH] x 100 is in the range of from 70 to 120, and with at least one blowing agent in the presence of at least one catalyst.

2. The method according to claim 1, **characterized in that** the bifunctional azo-compound, $R_1$ and $R_2$ are the same, preferably, the bifunctional azo-compound is azobisisobutanol.

3. The method according to claim 1, **characterized in that** the polyisocyanate compound is a compound having the general formula $R(NCO)_2$, wherein R is as defined in claim 1, and the molar ratio of the bifunctional azo-compound to the diisocyanate is from 1 : 2.0 to 1 : 2.5.

4. The method according to claim 3, **characterized in that** the diisocyanate compound is selected from the group comprising 2,4-toluenediisocyanates, 2,6-toluenediisocyanates or mixtures thereof.

5. The method according to claim 1, **characterized in that** the polyols are selected from the group comprising polyols obtained from crude oil and polyols based on natural oils, preferably from polyols based on polyethers, polyesters, polyacetals, polycarbonates, polyesterethers, polyestercarbonates, polythioethers, polyamides, polyesteramides, polysiloxanes, polybutadiens and polyacetones, more preferably polyetherpolyols of the petrochemical origin having hydroxyl number in the range of 40 - 600 mg KOH/g.

6. The method according to claim 1, **characterized in that** the blowing agent is water, and the amount of water added is 2 to 20 % w/w, relative to polyisocyanate.

7. The method according to claim 1, **characterized in that** the catalyst is present in the mixture in the amount of 0.01 to 0.4 % w/w, relative to the total mass of the mixture, and it is selected from the group comprising tertiary amines and tin-containing compounds.

8. The method according to claim 1, **characterized in that** the mixture containing at least one azoisocyanate precursor, at least one polyol, at least one blowing agent and at least one catalyst further contains at least one further additive selected from the group comprising surfactants, stabilizers, fire retardants, fillers, pigments and antioxidants.

9. The method according to claim 1, **characterized in that** the mixture containing at least one azoisocyanate precursor, at least one polyol, at least one blowing agent and at least one catalyst further contains at least one polyisocyanate.

## Patentansprüche

1. Das Verfahren zur Herstellung von thermodegradierbaren Polyurethanschaumstoffen, **dadurch gekennzeichnet, dass** mindestens eine bifunktionelle Azoverbindung mit der allgemeinen Formel

   $X-CH_2-C(R_1R_2)-N=N-C(R_1R_2)-CH_2-X$,

   wobei X -OH, -COOH oder -COOMe ist und $R_1$ und $R_2$ $C_1$-$C_{20}$-Alkyl oder $C_5$-$C_{20}$-Cycloalkyl sind, mit mindestens einer Polyisocyanatverbindung der allgemeinen Formel

   R(NCO) n,

   vermischt ist, wobei n eine ganze Zahl von 2 bis 5 ist, R aus einer Gruppe, umfassend einen aliphatischen Kohlenwasserstoff, der 2-18 Kohlenstoffatomen enthält, einen cycloaliphatischen Kohlenwasserstoff, der 4-15 Kohlenstoffatomen enthält, einen Arylalkyl, der 8-15 Kohlenstoffatomen enthält und einen aromatischen Kohlenwasserstoff, der 6-15 Kohlenstoffatomen enthält,
   bei einer Temperatur von 20 °C bis 50 °C, wodurch eine Azoisocyanatevorläuferverbindung produziert wird, die anschließend mit mindestens einem Polyol, wobei der Isocyanat-Index [NCO]/[OH] x 100 im Bereich von 70 bis 120, und mit mindestens einem Treibmittel in Gegenwart von mindestens einem Katalysator gemischt wird.

2. Das Verfahren gemäß Anspruch 1, **dadurch gekennzeichnet, dass** in der bifunktionellen Azoverbindung $R_1$ und $R_2$ gleich sind, vorzugsweise ist die bifunktionelle Azoverbindung ein Azobisisobutanol.

3. Das Verfahren gemäß Anspruch 1, **dadurch gekennzeichnet, dass** die Polyisocyanatverbindung eine Verbindung mit der allgemeinen Formel $R(NCO)_2$ ist, worin R wie im Anspruch 1 definiert ist und das Molverhältnis der bifunktionellen Azoverbindung an das Diisocyanat ist von 1 : 2,0 bis 1 : 2,5.

4. Das Verfahren gemäß Anspruch 3, **dadurch gekennzeichnet, dass** die Diisocyanatverbindung aus der Gruppe, umfassend Toluol-2,4-diisocyanate, Toluol-2,6-diisocyanate oder deren Mischungen, ausgewählt ist.

5. Das Verfahren nach Anspruch 1, **dadurch gekennzeichnet, dass** die Polyole aus der Gruppe, umfassend aus Rohöl erhaltenen Polyole und auf natürlichen Ölen basierende Polyole, vorzugsweise Polyole, basierende auf Polyethern, Polyestern, Polyacetale, Polycarbonaten, Polyesterethern, Polyestercarbonaten, Polythioethern, Polyamiden, Polyesteramide, Polysiloxane, Polybutadiene und Polyacetone, mehr bevorzugt Polyetherpolyole des petrochemischen Ursprungs mit Hydroxylzahl im Bereich von 40 - 600 mg KOH / g.

6. Das Verfahren nach Anspruch 1, **dadurch gekennzeichnet, dass** das Treibmittel Wasser ist und die Menge an zugegebenem Wasser von 2 bis 20 Gewichtsprozent, bezogen auf Polyisocyanat, ist.

7. Das Verfahren nach Anspruch 1, **dadurch gekennzeichnet, dass** der Katalysator in der Mischung in einer Menge von 0,01 bis 0,4 Gewichtsprozent, bezogen auf die Gesamtmasse der Mischung, anwesend ist, und er aus der Gruppe, umfassend tertiären Amine und Zinn-enthaltende Verbindungen ausgewählt wird.

8. Das Verfahren nach Anspruch 1, **dadurch gekennzeichnet, dass** die Mischung, enthaltend mindestens eine Azoisocyanatevorläuferverbindung, mindestens einen Polyol, mindestens ein Treibmittel und mindestens einen Katalysator zusätzlich mindestens einen weiteren Zusatzstoff aus der Gruppe, umfassend Tenside, Stabilisatoren, Flammschutzmittel, Füllstoffe, Pigmente und Antioxidantien beinhaltet.

9. Das Verfahren nach Anspruch 1, **dadurch gekennzeichnet, dass** die Mischung, enthaltend mindestens eine Azoisocyanatevorläuferverbindung, mindestens einen Polyol, mindestens ein Treibmittel und mindestens einen Katalysator zusätzlich mindestens einen Polyisocyanat aufweist.

## Revendications

1. Procédé de préparation de mousses polyuréthane thermodégradables **caractérisé en ce qu'**au moins un composé azoïque bifonctionnel répondant à la formule générale

$X-CH_2-C(R_1R_2)-N=N-C(R_1R_2)-CH_2-X$,

dans laquelle X représente -OH, -COOH ou -COOMe et $R_1$ et $R_2$ représentent un alkyle $C_1-C_{20}$ ou cycloalkyle $C_5-C_{20}$, est mélangé avec au moins un composé de polyisocyanate répondant à la formule générale

$R(NCO)_n$,

dans laquelle n représente un nombre entier entre 2 et 5, R est choisi parmi le groupe comprenant un hydrocarbure aliphatique contenant 2 à 18 atomes de carbone, un hydrocarbure cycloaliphatique comportant 4 à 15 atomes de carbone, un arylalkyle comprenant 8 à 15 atomes de carbone et un hydrocarbure aromatique comportant 6 à 15 atomes de carbone, à une température de 20 °C à 50 °C formant un précurseur azoisocyanate, lequel est ensuite mélangé avec au moins un polyol, l'indice isocyanate [NCO]/[OH] x 100 étant situé dans la plage de 70 à 120, et avec au moins un gonflant en présence d'au moins un catalyseur.

**2.** Procédé selon la revendication 1 **caractérisé en ce que** dans le composé azoïque bifonctionnel $R_1$ et $R_2$ sont identiques, de préférence le composé azoïque bifonctionnel étant l'azobisisobutanol.

**3.** Procédé selon la revendication 1 **caractérisé en ce que** le composé polyisocyanate est un composé répondant à la formule générale $R(NCO)_2$, où la définition de R étant celle définie dans la revendication 1 et le rapport molaire du composé azoïque bifonctionnel et du diisocyanate allant de 1 : 2,0 à 1 : 2,5.

**4.** Procédé selon la revendication 3, **caractérisé en ce que** le composé diisocyanate est choisi parmi le groupe comprenant les 2,4-toluenediisocyanates, 2,6-toluenediisocyanates ou leurs mélanges.

**5.** Procédé selon la revendication 1 **caractérisé en ce que** les polyoles sont choisis parmi le groupe comprenant les polyoles obtenus du pétrole brut et les polyoles basés sur les huiles naturelles, de préférence parmi le groupe de polyoles basés sur les polyéthers, polyesters, polyacétals, polycarbonates, polyesteréthers, polyestercarbonates, polythioéthers, polyamides, polyesteramides, polysiloxanes, polybutadiènes et polyacétones, de préférence les polyétherpolyoles d'origine pétrochimique ayant le numéro hydroxyle dans la plage de 40 à 600 mg KOH/g.

**6.** Procédé selon la revendication 1 **caractérisé en ce que** le gonflant est l'eau et la quantité de l'eau ajoutée allant de 2 à 20% w/w, relativement au polyisocyanate.

**7.** Procédé selon la revendication 1 **caractérisé en ce que** le catalyseur est présent dans le mélange en quantité allant de 0,01 à 0,4 % w/w, relativement à la masse totale du mélange et est choisi parmi le groupe comprenant les amines tertiaires et les composants comprenant l'étain.

**8.** Procédé selon la revendication 1 **caractérisé en ce que** le mélange comprenant au moins un précurseur azoisocyanate, au moins un polyole, au moins un gonflant et au moins un catalyseur contient en outre au moins un autre additif choisi parmi le groupe comprenant les surfactants, stabilisateurs, retardateur de combustion, charges, pigments et antioxydants.

**9.** Procédé selon la revendication 1 **caractérisé en ce que** le mélange comprenant au moins un précurseur azoisocyanate, au moins un polyole, au moins un gonflant et au moins un catalyseur contient en outre au moins un polyisocyanate.

## Table 1

| Reactant | REF. PUR Amount [g] | 1.6 % w/w ABIB [g] | 7.8 % w/w ABIB [g] | 12.6 % w/w ABIB [g] | 18.3 % w/w ABIB [g] |
|---|---|---|---|---|---|
| azo-TDI | - | 8.07 | 40.40 | 80.71 | 155.69 |
| TDI 80/20 (extra) | 53.91 | 50.58 | 40.45 | 27.10 | - |
| polyetherpolyol (OH = 48±3) | 100 | 100 | 100 | 100 | 100 |
| water | 4.68 | 4.68 | 4.68 | 4.68 | 4.68 |
| catalyst mixture *) | 0.33 | 0.33 | 0.33 | 0.33 | 0.33 |
| polydimethylsiloxane | 1.00 | 1.00 | 1.00 | 1.00 | 1.00 |

Catalyst mixture composition *)

| | [g] | [% w/w] |
|---|---|---|
| bis(dimethylamino)ethyl)ether | 0.03 | 0.02 |
| triethylenediamine | 0.09 | 0.06 |
| Tin ethylhexanoate | 0.21 | 0.13 |

Table 2

| Degradation temperatures (°C) | ABIB | 0 % ABIB REF. PUR | 1.6 % ABIB | 7.8 % ABIB | 12.6 % ABIB | 18.3 % ABIB |
|---|---|---|---|---|---|---|
| $T_0$ | 83.6 | 240.9 | 227.6 | 213.6 | 198.8 | 177.7 |
| $T_A$ | 177.0 | - | 272.9 | 253.8 | 241.3 | 226.5 |
| $T_U$ | - | 336.2 | 331.2 | 323.4 | 314.3 | 314.6 |
| $T_E$ | - | 416.9 | 415.1 | 416.9 | 412.4 | 418.7 |

Table 3

| | 0 % ABIB | 7.8 % ABIB | 18.3 % ABIB |
|---|---|---|---|
| Weight loss in 6 hours at 200 °C | 6.8 % | 11.4 % | 20.1 % |
| Degradation rate constant $k = 1/t_1$ ($s^{-1}$) | 0.003 | 0.006 | 0.01 |

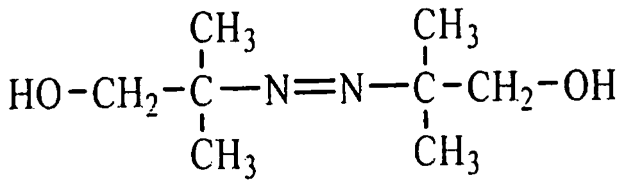

Fig. 1

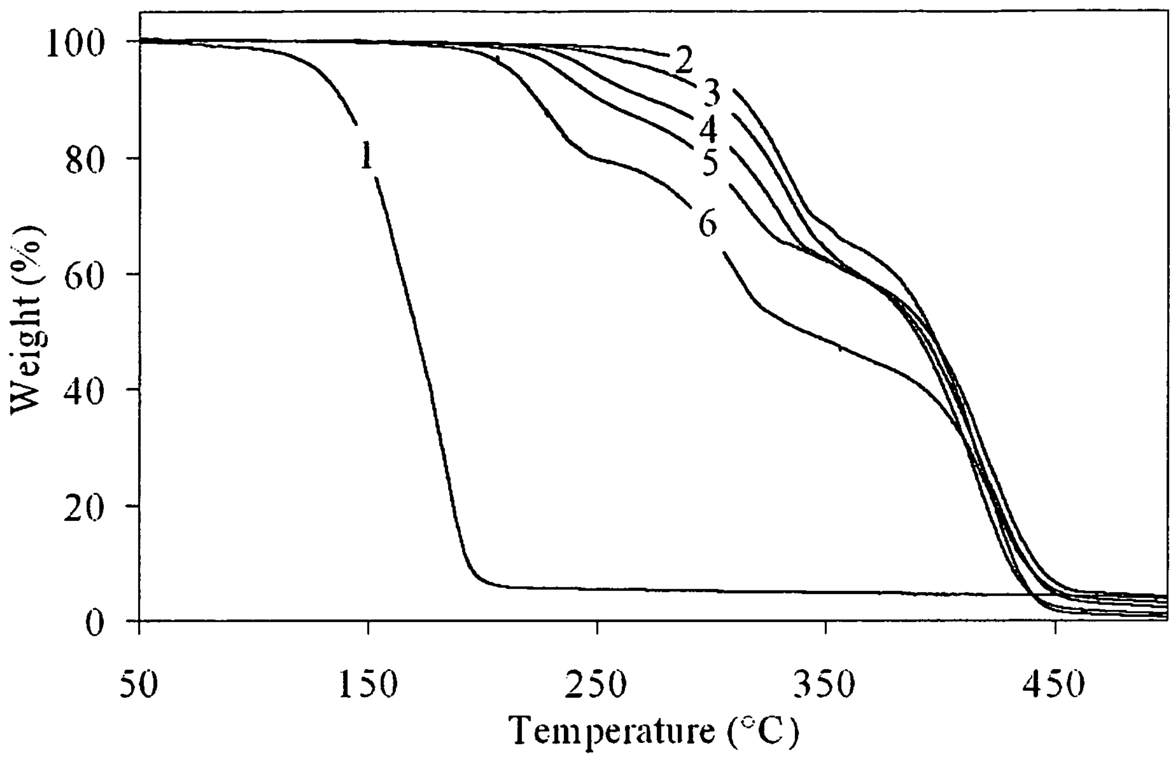


| | |
|---|---|
| 1 – 0 % ABIB | 4 – 12,6 % ABIB |
| 2 – 1,6 % ABIB | 5 – 18,3 % ABIB |
| 3 – 7,8 % ABIB | 6 – 100 % ABIB |

Fig. 2

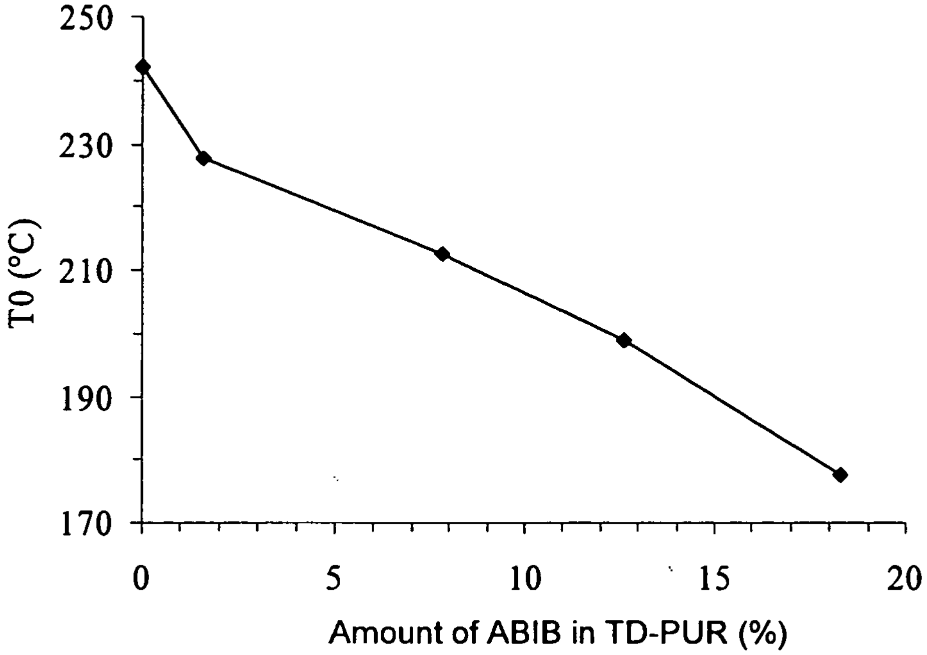


Fig. 3

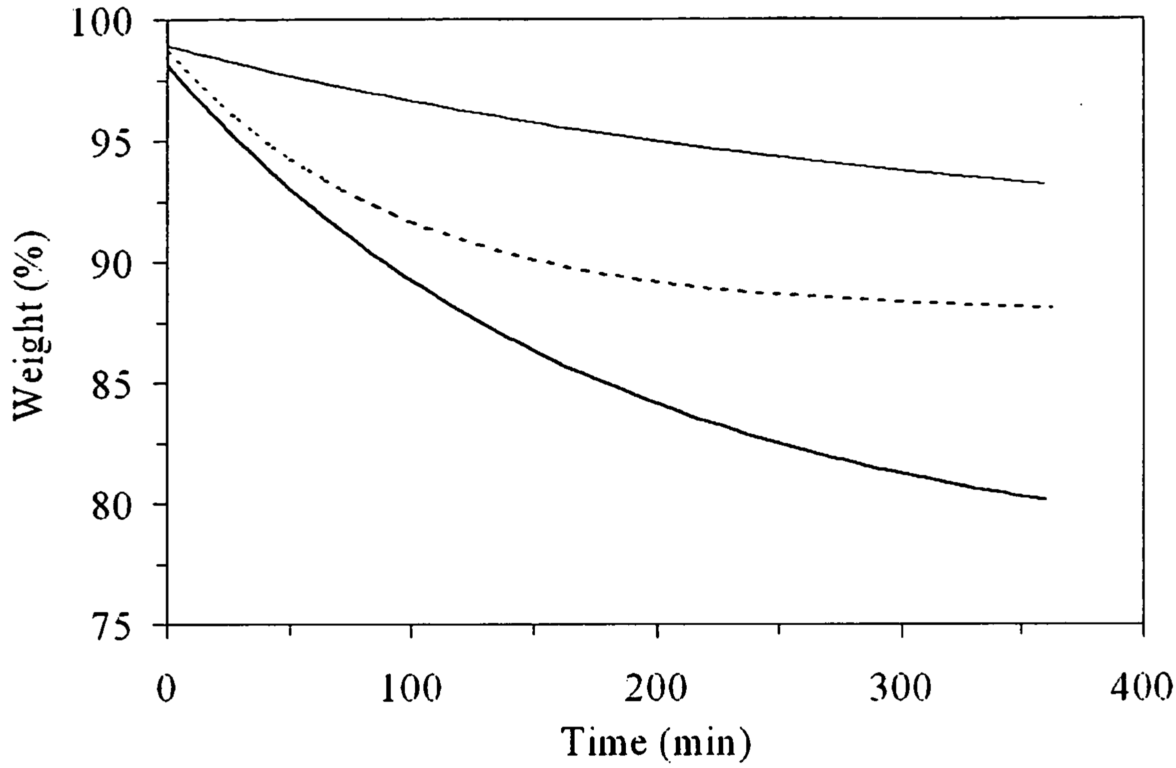


Solid thin line – REF.PUR (0% ABIB)
Dashed line – 7.8 % ABIB in TD-PUR
Solid thick line – 18.3% ABIB in TD-PUR

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3909497 A, Hendry
- DE 1299880, A. Frese
- US 3306888 A, Mortimer


### Non-patent literature cited in the description


- **G. OERTEL.** Polyurethane handbook. Hanser Publisher, 1993